# EUROPEAN PATENT APPLICATION

(11) **EP 2 228 965 A1**
(43) Date of publication of application: **15.09.2010**
(21) Application number: 09305226.4
(22) Date of filing: 12.03.2009
(51) Int. Cl.: H04L 29/06, H04W 84/18

(54) **Gateway and method for connecting an IP network to a sensor network**

(71) Applicant: Alcatel Lucent, 75008 Paris (FR)
(72) Inventor: Dobbelaere, Philippe, 2520 Broechem (BE)
(74) Representative: D'Halleweyn, Nele Veerle Trees Gertrudis

(57) **Abstract**

Gateway for connecting an IP network to a sensor network consisting of a number of endpoints that can be in a hibernating mode, wherein packets sent from the IP network to an endpoint are buffered in the gateway, said gateway comprising one or more buffers, wherein the gateway is adapted for processing inputs coming from the sensor network regarding the state of the endpoints into a transport protocol transition state machine, wherein the gateway is further implemented with one or more automatic backpressure flow control mechanisms adapted to take into account the state of the sensor network and/or the extent to which the one or more buffers are filled.

## Description

### FIELD OF THE INVENTION

The present invention relates to a gateway and method for connecting an IP network to a sensor network consisting of a number of endpoints that may be hibernating, also called sensor nodes or motes typically capable of performing some processing, gathering sensor information and communicating with other connected nodes in the sensor network.

### BACKGROUND

Emerging sensor networks typically consist of nodes that are in power-down (also known as hibernated) mode most of the time due to power saving reasons or nomadic behaviour - only sporadically, the devices wake up and connect with each other and/or with a network gateway to exchange information. The network technology preferentially used in multi-tier and client-server applications is TCP/IP, abstracted under the form of Berkeley (BSD) socket application programming interfaces (API's). However, there is a fundamental problem in using TCP to connect an application to a sensor that is most of the time not able to communicate: packets will get queued up in kernel buffers all over the network, and goodput will be reduced to zero. Further, even using UDP (raw sockets) is not a good solution, since an UDP forwarder will typically drop packets if the next hop is not available.

Today, no universal solution is available - all practical implementations rely on some form of packet store and forward between the IP network and the nodes that can be in power-down mode.

As an alternative solution, IETF (Internet Engineering Task Force) Request for Comments (RFC) 4838 (on delay-tolerant networking architecture) tries to tackle a similar problem by defining an overlay on top of the IP network, however, with the disadvantage that it requires all participating nodes to implement additional networking protocols.

Finally solutions have been provided where a gateway to the sensor network is used.

### SUMMARY

The object of the invention is to enable applications to use the classic socket paradigm to connect to sensor networks with hibernating endpoints.

According to an embodiment the gateway according to the invention is distinguished in that the gateway is adapted for processing inputs coming from the sensor network regarding the state of the endpoints into a transport protocol transition state machine, wherein the gateway is further provided with one or more automatic backpressure flow control mechanisms adapted to take into account the states of the endpoints of the sensor network and/or the extent to which the one or more buffers are filled.

Such a gateway isolates the always-on IP network from the sensor network, wherein from the application side the sensor network looks like any other node in the always-on IP network, because the gateway looks as a standard endpoint to the IP network. The gateway is provided with a transport protocol transition state machine, so that the state of the endpoints is known at the gateway. In that way, the gateway can be provided with backpressure flow control mechanisms taking into account the states of the endpoints of the sensor network and/or the extent to which the one or more buffers are filled.

The term "backpressure flow control mechanisms" in the context of this application has to be interpreted broadly and refers to any backpressure flow control measures, and in particular to any flow control measures taken to control the build-up of data in the gateway.

According to a preferred aspect of the invention, the one or more automatic backpressure flow control mechanisms include one or more of the following:
- the gateway comprises one or more IP kernel buffers where the packets coming from the IP network are received, and one or more store and forward buffers for storing the received packets, so that the one or more IP kernel buffers can be emptied;
- the gateway is arranged so that the time between the receipt of a packet and the sending of an acknowledgement message is determined in function of the extent to which the one or more buffers are filled;
- the gateway is arranged so that messages with different priorities can be received from the IP network, wherein a different buffer is provided for each priority; preferably the gateway is a TCP Proxy and is adapted for treating messages with a TCP urgent pointer with higher priority.

According to a preferred aspect of the invention, the gateway is adapted to use a sensor network specific protocol to exchange messages with the sensor network, so that the state machine is provided with an interface for pulling-in the state of the sensor nodes. Further it is possible to implement the sensor network in such a way that transport protocol messages with different priorities are used. The gateway can then be accepted for treating those messages from the sensor network in accordance with the indicated priority.

The gateway is preferable a TCP Proxy but can e.g. also be a UDP Proxy.

According to an embodiment of the method of the invention, the method for connecting an IP network to a sensor network consisting of a number of endpoints that can be in a hibernating mode, comprises the following steps:
- transport protocol packets sent from the IP network to an endpoint are buffered in one or more buffers in a gateway between the IP network and the sensor network,
- the gateway is processing messages coming from the sensor network regarding the state of the endpoints into a transport protocol transition state machine,
- one or more automatic backpressure mechanisms are used by the gateway taking into account the state of the endpoints and/or the extent to which the one or more buffers are filled.

Preferably said one or more backpressure flow control mechanisms used in the method of the invention comprise one or more of the following measures:
- delaying the time between the receipt of packet and the sending of an acknowledgement message in function of the extent to which the one or more buffers are filled;
- treating messages with different priorities and using a different buffer for each priority, wherein messages sent to and received from the sensor network are preferably treated in the gateway in accordance with the indicated priority.

According to a preferred aspect of the method of the invention, the gateway is running a modified transport protocol stack, using a transport protocol with delineated packets, preferably without fragmentation of reassembly between the IP network on the one hand and the endpoints in the sensor network on the other hand.

### BRIEF DESCRIPTION OF THE FIGURES

The accompanying drawings are used to illustrate presently preferred non-limiting exemplary embodiments of the present invention. The above and other advantages, features and objects of the invention will become more apparent and the invention will be better understood from the following detailed description when read in conjunction with the accompanying drawings in which:
- Figure 1 is a schematic view of the architecture of an embodiment of the system of the invention;
- Figure 2 illustrates a possible stack configuration at the server side, at the proxy and in the sensor node;
- Figure 3 illustrates a TCP state diagram illustrating an embodiment of the method of the invention.

### DETAILED DESCRIPTION OF EMBODIMENTS

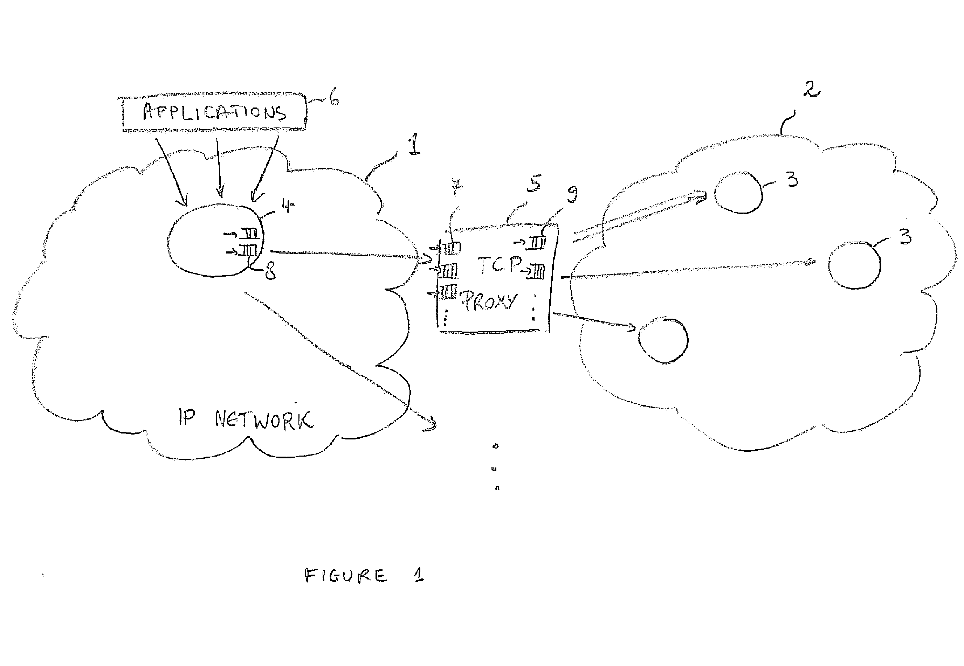

Figure 1 shows an embodiment of an architecture with a number of gateways according to the invention. An always-on IP network 1 is connected via a number of gateways 5 to a sensor network 2 having a plurality of sensor nodes 3 that may be hibernating. Using such a topology a number of applications can communicate with the sensor nodes.

The gateways 5 take the form of proxy's, for example TCP proxy's. Note that an UDP variant with downsized functionality would be equally possible. Such a proxy isolates the always-on IP network 1 from the hibernating sensor node network 2. From the application side 6, the sensor network looks like any other node in the always-on network, because the proxy 5 looks as a standard TCP endpoint to the IP network 1. In that way existing applications do not need to be redesigned to cope with hibernating sensor nodes, and more in particular the socket paradigm can be used to connect to hibernating sensor networks. Apart from the network node where the proxy is implemented, no changes to the currently implemented networking protocol stacks are required.

In the proxy gateway 5, ss part of the back pressure mechanism, the content of the IP kernel buffers 7 for sensor node connections are preferably emptied immediately and put in store and forward buffers 9. In that way it is avoided that content is lost due to too full kernel buffers 7. In other words the proxy implements packet buffering outside the TCP kernel buffers 7, making sure that the hibernating nodes do not cause kernel buffer hogging. This ensures that other incoming network connections (not directed at the sensor network) on the proxy node 5 serving as a gateway to the hibernating sensor network have kernel buffer resources available.

The packet buffering effectively establishes a store-and-forward mechanism.

According to a further advantageous feature, a window mechanism is optimised to cope with the hibernating behaviour of the sensor nodes. Sliding window protocols such as TCP use a sliding window to avoid stop-and-go behaviour by pipelining the delivery of data. The basic rules of engagement are that the receiver advertises a window size and the sender can send up to that amount of data. No more data can be sent until the first part of the data is acknowledged.

The TCP standard specifies that a receiver can never shrink the window size for an existing connection because by the time the sender receives notification of the smaller window size, it may have already sent more data than will fit in the new window. If, however, the receiver is not concerned with strict adherence to window sizes, it can accept this possibility. If a receiver were to lower the advertised window size when memory starts to become scarce, it would generally be successful at reducing the upper bound of the speed at which the sender could transmit data. However, to avoid dropping packets and triggering congestion control mechanisms, it must be prepared to receive more data than will fit in the new window. By modifying the (receive) window size/adapting the window mechanism in a suitable way, in particular taking into account the state of the sensor network, the connectivity between the IP network and the sensor network can be further improved.

According to a further advantageous backpressure flow control means (which may be implemented as an alternative of the above discussed backpressure flow control means or in addition thereto), the sending of acknowledgement messages can be delayed when the store and forward buffers are filled up to a certain threshold, and in particular TCP ACK withholding (or postponing) can be used towards the applications if the store and forward buffers are getting full. However, the skilled person will understand that other end-to-end backpressure flow control mechanisms (and in case of a reliable transfer, retransmit mechanisms), can be provided between the proxy and the sensor endpoint. An example of such a retransmit mechanism is the automatic resending of non-acknowledged packets. Packets can also be selectively acknowledged giving priority to certain packets.

According to a further advantageous feature (which may be implemented as an alternative of the above discussed backpressure flow control means or in addition thereto), a high priority class is created in the always-on IP network towards the sensor network, e.g. supporting higher priority configuration messages. As an exemplary embodiment two priorities are considered, but the skilled person will understand that more priorities are possible. Every priority typically has disjoint resources, such as buffers on the processing nodes of the IP network. In the case of TCP, a TCP urgent pointer mechanism can be used to implement a two level QoS towards the sensor network. TCP uses urgent pointer to make sure higher priority does not suffer from head of line blocking between the proxy and the sensor network.

According to a further advantageous feature a sensor technology specific protocol supporting two or more priorities can be used. In that way end-to-end, two or more priorities can be guaranteed without head-of-line blocking between the priorities. The result is a guaranteed delivery of for example configuration/control messages (if those messages are given higher priority) even if the data buffers are congested. In other words an end-to-end multiple level priority mechanism between the application and the sensor mote is preferred, ensuring e.g. that configuration/control messages arrive at the sensor even when data messages would be congested.

In conclusion, when using for example TCP in the always-on network, end-to-end, reliable delivery can be guaranteed.

It is preferred that no fragmentation or reassembly is used between the proxy and the sensor network, and that a means of packet delineation and guaranteed delivery is available. This contributes to a reliable end-to-end link between the sensor node and the application.

Packets are transmitted, preferably using TCP, and not (infinite length) byte streams. If available, sock_seqpacket can be selected, which is a reliable sequenced packet service, wherein the record boundaries are maintained. A record can be sent using one or more output operations and received using one or more input operations, but a single operation never transfers parts of more than one record. If only sock_stream is available, which is a reliable stream-oriented service without record boundaries, packet behaviour can be emulated by prefixing the packet with the packet size in the TCP stream, allowing for packet delineation.

More in particular, according to a possible embodiment of the invention, TCP is not used in streaming mode, but as a transport protocol for delineated packets. As a consequence, a maximum packet size can be exposed to the application which makes re-segmentation at the packet level in the sensor network unneeded. The proxy will buffer these packets, and can send each individual packet in a single sensor message. The packet delineation also makes it realistic to implement a reliable channel between proxy and sensor mote, based on single packet retransmit. Note that this is much simpler than a windowing mechanism required for partial stream retransmit.

According to a possible embodiment each gateway proxy has additional inputs governing the state transitions. These inputs express knowledge about the attached sensor nodes. An API towards the sensor network will be made available. The modifications to the state machine are typically from closed to active_open or established (only allowed if the sensor node was active in a predetermined preceding timeframe). The proxy will use a sensor network specific protocol to exchange messages with the sensor network. In other words it is preferred to have an interface in the TCP state machine that can pull in the state of the sensor mote into the proxy (hibernated or not, congested or not).

If UDP is used instead of TCP, the above described functionality described under TCP that is applicable to UDP can also be implemented. However, since UDP is not a reliable protocol, the link between the proxy and the sensor node will typically not need to be reliable either.

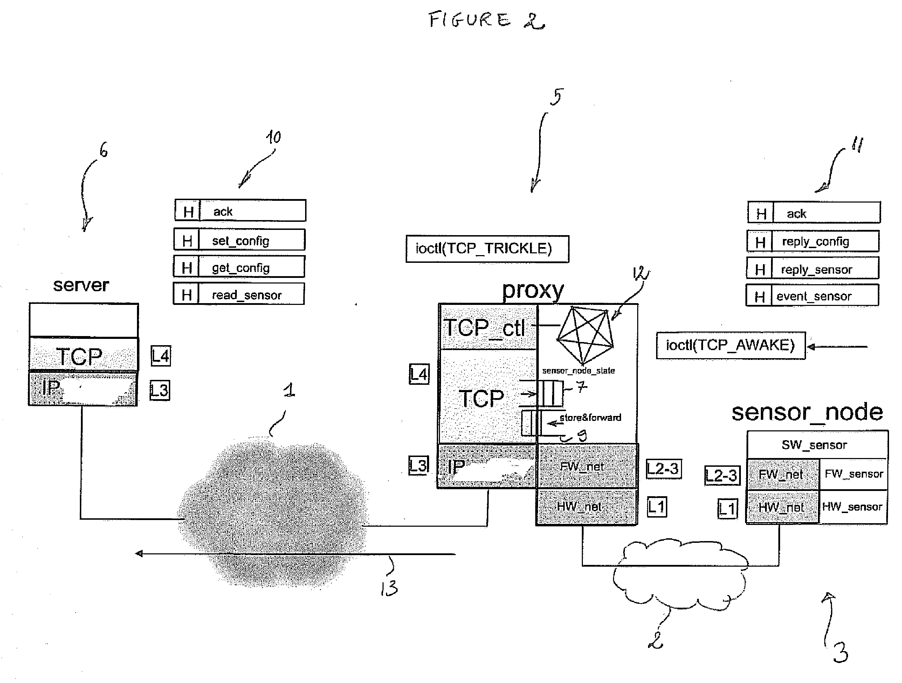

Figure 2 illustrates a possible stack configuration at the server/application side 6, at the proxy 5 and in the sensor node 3. It is noted that only the layers of the stacks relevant for explaining the invention have been shown in figure 2. The communication between the back office (server 6) and the proxy 5 is standard with the exception of the specially adapted back pressure mechanism that is implemented in the proxy 5. At the server side the protocol stack does not have to be changed and will for example contain an IP layer for level 3 and a TCP or UDP layer for level 4. At the proxy side 5 communicating with the server a similar stack can be found. At the sensor side and at the proxy side communicating with the sensor network, standard level 1, 2 and 3 layers can be used which are indicated in figure 2 with HW_net (Hardware) and FM_net (Firmware). For communicating between the proxy and the sensor nodes a very simple transport protocol (which will typically be proprietary) can be used indicated in figure 2 with SW_sensor.

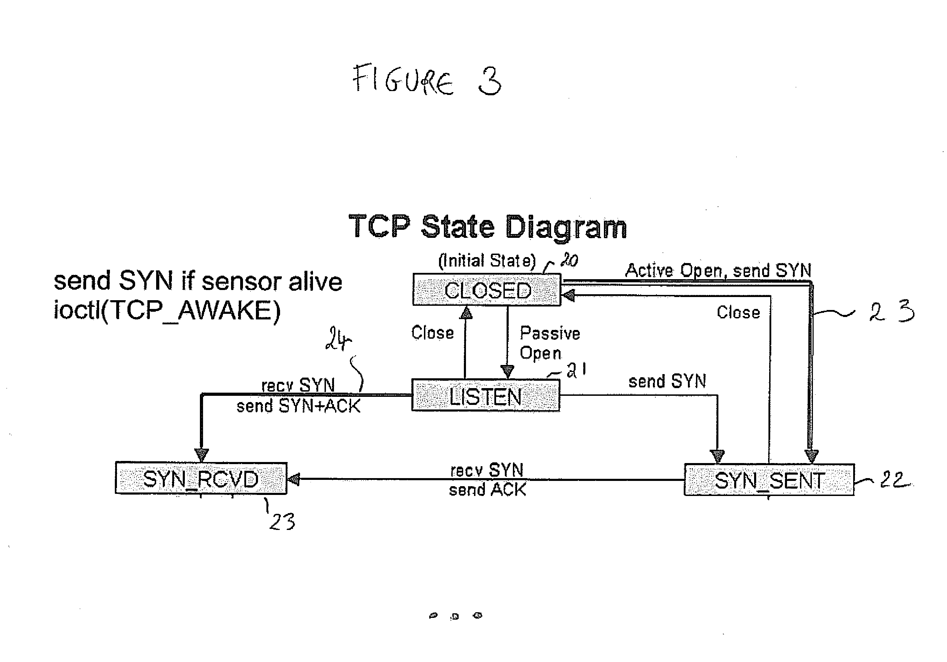

The proxy 5 is further provided with a state machine maintaining a model 12 of the states, the transitions between those states and the actions. This will typically be a TCP transition state machine as will be further explained when referring to figure 3.

Figure 2 further illustrates a number of messages 10, 11 which can be exchanged between server 6 and sensor node 3:
- a set-config message sent from the server to a sensor node via the proxy, with instructions on how to set the configuration of a sensor node;
- a "get_config" message sent from the server to a sensor node via the proxy, requesting to get the configuration parameters of the sensor node; this message will be answered by the sensor node with a "reply_config" message wherein the configuration of the sensor node is included;
- a "read_sensor" message sent from the server to a sensor node via the proxy, requesting to read the state of the sensor of a sensor node; this message will be answered with a "reply_sensor" message from the sensor node, indicating the state of the sensor;
- a "event_sensor" message sent from a sensor node to the proxy to indicate when the state of the sensor has changed, e.g. a door which had changed from an open state to a closed state;
- "ack" messages to acknowledge the receipt of a message.

As backpressure flow control mechanisms one or more of the following measures may be implemented in the proxy 5:
- the postponing of acknowledgment messages sent by the proxy in the direction of arrow 13;
- the use of different buffers in the proxy, preferably coupled with the use of messages with different priorities, for example using a TCP urgent pointer for priority messages in case of TCP;
- a windowing mechanism wherein the size of the window is determined taking into account certain parameters (states, transitions or actions) of the state machine and/or the extent to which the buffers are filled. When using TCP, a "TCP_TRICKLE" control message can be used to select an optimised TCP window algorithm, allowing backpressure from store and forward buffers 9. The trickle message will signal to the TCP state machine to switch over to a windowing mechanism that is better suited for hibernated devices. Typically, there is no requirement for explicit window sizes. However, theoretically the window mechanism parameters could be embedded in the trickle message, and in that case these parameters would take precedence over the default parameters hardcoded in the adapted window mechanism. The skilled person will understand that instead of using a trickle message, any other manner van be used to inform the TCP state machine that this connection deals with hibernated devices and as such needs an adapted windowing mechanism. It would be sufficient to do this once when the TCP session is set up. However, it is possible to use this message or any one signaling means specifically intended therefore, to dynamically adjust the window parameters any time during the lifetime of the TCP session. Checking of the buffer filling level could for example be done automatically as part of the window mechanism, and does not have to be triggered by the reception of one or more trickle messages.

Further, if TCP is used, the communication between the server side and the proxy side is preferably arranged for a guaranteed delivery.

The communication between the proxy side and the sensor network typically has the following properties:
- no fragmentation, reassembly
- packet delineation
- 2 priorities
- guaranteed delivery if required (and if using TCP).

Further the sensor nodes 3 are preferably adapted for sending "TCP_AWAKE" control messages for notifying the state machine that the sensor node is alive. Such a message will reset the watchdog in TCP/UDP connect state machine 12.

Figure 3 illustrates a part of the TCP state diagram (fully shown in figure 6 of RFC793 available from http://www.ietf.org/rfc/rfc0793.txt) for explaining the use of the "TCP_AWAKE" signal to notify the proxy that a sensor is alive. The diagram illustrates only state changes, together with the causing events and resulting actions.

When a sensor node is in a "closed" state 20 and wakes up it will send a "TCP awake" message, bringing the node in a SYN_SENT state, see arrow 20. When the sensor node is in the "listen" state 21, it may receive a message from the proxy indicating that the proxy wishes to open a TCP connection, see arrow 24.Failure to receive a TCP_AWAKE ioctl for a determined period of time will set the sensor node to be unreachable, optionally triggering a backpressure flow control to the application.

While the principles of the invention have been set out above in connection with specific embodiments, it is to be clearly understood that this description is merely made by way of example and not as a limitation of the scope of protection which is determined by the appended claims.

## Claims

1. Gateway for connecting an IP network to a sensor network consisting of a number of endpoints that can be in a hibernating mode, wherein packets sent from the IP network to an endpoint are buffered in the gateway, said gateway comprising one or more buffers,
wherein the gateway is adapted for processing inputs coming from the sensor network regarding the state of the endpoints into a transport protocol transition state machine,
wherein the gateway is further implemented with one or more automatic backpressure flow control mechanisms adapted to take into account the state of the sensor network and/or the extent to which the one or more buffers are filled.

2. Gateway according to claim 1, wherein the gateway comprises one or more IP kernel buffers where the packets coming from the IP network are received, and one or more store and forward buffers for storing the received packets, so that the one or more IP kernel buffers can be emptied.

3. Gateway according to any of the previous claims, wherein the gateway is arranged for sending acknowledgement messages for acknowledging the receipt of a packet at the gateway,
wherein one of said one or more backpressure flow control mechanisms consists in arranging the gateway so that the time between the receipt of a packet and the sending of an acknowledgement message is determined in function of the extent to which the one or more buffers are filled.

4. Gateway according to any of the previous claims, wherein the IP network is implemented for using transport protocol messages with different priorities, wherein one of said one or more backpressure flow control mechanisms consists in arranging the gateway so that messages with different priorities can be received from the IP network, wherein a different buffer is provided for each priority.

5. Gateway according to any of the previous claims, wherein the IP network is implemented for using a TCP urgent pointer mechanism, wherein the gateway is a TCP proxy and wherein the gateway is adapted for treating messages with a TCP urgent pointer with higher priority.

6. Gateway according to any of the previous claims, wherein the gateway is adapted to use a sensor network specific protocol to exchange messages with the sensor network so that the state machine is provided with an interface for pulling in the state of the sensor nodes.

7. Gateway according to any of the previous claims, wherein the sensor network is implemented for using transport protocol messages with two or more priorities, wherein the gateway is adapted for treating messages sent to and received from the sensor network in accordance with the indicated priority.

8. Gateway according to any of the previous claims, wherein the gateway is a TCP proxy or a UDP proxy.

9. Gateway according to any of the previous claims, wherein the gateway is further adapted for running a modified transport protocol stack, using a transport protocol with delineated packets, preferably without fragmentation of reassembly between the IP network on the one hand and the endpoints in the sensor network on the other hand.

10. Method for connecting an IP network to a sensor network consisting of a number of endpoints that can be in a hibernating mode, wherein
- transport protocol packets sent from the IP network to an endpoint are buffered in one or more buffers in a gateway between the IP network and the sensor network,
- the gateway is processing messages coming from the sensor network regarding the state of the endpoints into a transport protocol transition state machine,
- one or more automatic backpressureflow control mechanisms are used by the gateway taking into account the state of the endpoints and/or the extent to which the one or more buffers are filled.

11. Method according to claim 10, wherein the gateway is sending acknowledgement messages for acknowledging the receipt of a packet at the gateway, wherein one of said one or more backpressure flow control mechanisms consists in delaying the time between the receipt of packet and the sending of an acknowledgement message in function of the extent to which the one or more buffers are filled.

12. Method according to claim 10 or 11, wherein the IP network is implemented for using transport protocol messages with different priorities, wherein one of said one or more backpressure flow control mechanisms consists in receiving messages with different priorities and using a different buffer is provided for each priority.

13. Method according to any of the claims 10-12, wherein the sensor network is implemented for using transport protocol messages with two or more priorities, wherein messages sent to and received from the sensor network are treated in the gateway in accordance with the indicated priority.

14. Method according to any of the claims 10-13, wherein the gateway is a TCP proxy or a UDP proxy.

15. Method according to any of the claims 10-14, wherein the gateway is running a modified transport protocol stack, using a transport protocol with delineated packets, preferably without fragmentation of reassembly between the IP network on the one hand and the endpoints in the sensor network on the other hand.

## Amended claims

### Amended claims in accordance with Rule 137(2) EPC.

**1.** Gateway for connecting an IP network (1) to a sensor network (2) consisting of a number of endpoints (3) that can be in a hibernating mode, wherein packets sent from the IP network (1) to an endpoint are buffered in the gateway (5), said gateway (5) comprising one or more buffers (7,9), **characterized in that**
the gateway (5) is adapted for processing inputs coming from the sensor network (2) regarding the state of the endpoints into a transport protocol transition state machine (12), said transport protocol transition state machine (12) having an interface that can pull in the state of the endpoints; wherein the gateway (5) is further implemented with one or more automatic backpressure flow control mechanisms adapted to take into account the state of the sensor network (2) and/or the extent to which the one or more buffers are filled.

**2.** Gateway according to claim 1, wherein the gateway (5) comprises one or more IP kernel buffers (7) where the packets coming from the IP network (1) are received, and one or more store and forward buffers (9) for storing the received packets, so that the one or more IP kernel buffers (7) can be emptied.

**3.** Gateway according to any of the previous claims, wherein the gateway (5) is arranged for sending acknowledgement messages for acknowledging the receipt of a packet at the gateway (5), wherein one of said one or more backpressure flow control mechanisms consists in arranging the gateway (5) so that the time between the receipt of a packet and the sending of an acknowledgement message is determined in function of the extent to which the one or more buffers (9) are filled.

**4.** Gateway according to any of the previous claims, wherein the IP network (1) is implemented for using transport protocol messages with different priorities, wherein one of said one or more backpressure flow control mechanisms consists in arranging the gateway (5) so that messages with different priorities can be received from the IP network (1), wherein a different buffer (9) is provided for each priority.

**5.** Gateway according to any of the previous claims, wherein the IP network (1) is implemented for using a TCP urgent pointer mechanism, wherein the gateway (5) is a TCP proxy and wherein the gateway (5) is adapted for treating messages with a TCP urgent pointer with higher priority.

**6.** Gateway according to any of the previous claims, wherein the gateway (5) is adapted to use a sensor network specific protocol to exchange messages with the sensor network (2) so that the state machine is provided with an interface for pulling in the state of the sensor nodes (3).

**7.** Gateway according to any of the previous claims, wherein the sensor network (2) is implemented for using transport protocol messages with two or more priorities, wherein the gateway (5) is adapted for treating messages sent to and received from the sensor network (2) in accordance with the indicated priority.

**8.** Gateway according to any of the previous claims, wherein the gateway (5) is a TCP proxy or a UDP proxy.

**9.** Gateway according to any of the previous claims, wherein the gateway (5) is further adapted for running a modified transport protocol stack, using a transport protocol with delineated packets, preferably without fragmentation of reassembly between the IP network (1) on the one hand and the endpoints in the sensor network (2) on the other hand.

**10.** Method for connecting an IP network (1) to a sensor network (2) consisting of a number of endpoints that can be in a hibernating mode, wherein
- transport protocol packets sent from the IP network (1) to an endpoint are buffered in one or more buffers (9) in a gateway (5) between the IP network (1) and the sensor network (2),
- the gateway (5) is processing messages coming from the sensor network (2) regarding the state of the endpoints into a transport protocol transition state machine, wherein the state of the endpoints is pulled in over an interface of the transport protocol transition state machine,
- one or more automatic backpressure flow control mechanisms are used by the gateway (5) taking into account the state of the endpoints and/or the extent to which the one or more buffers (9) are filled.

**11.** Method according to claim 10, wherein the gateway (5) is sending acknowledgement messages for acknowledging the receipt of a packet at the gateway (5), wherein one of said one or more backpressure flow control mechanisms consists in delaying the time between the receipt of packet and the sending of an acknowledgement message in function of the extent to which the one or more buffers (9) are filled.

**12.** Method according to claim 10 or 11, wherein the IP network (1) is implemented for using transport protocol messages with different priorities, wherein one of said one or more backpressure flow control mechanisms consists in receiving messages with different priorities and using a different buffer (9) is provided for each priority.

**13.** Method according to any of the claims 10-12, wherein the sensor network (2) is implemented for using transport protocol messages with two or more priorities, wherein messages sent to and received from the sensor network (2) are treated in the gateway (5) in accordance with the indicated priority.

**14.** Method according to any of the claims 10-13, wherein the gateway (5) is a TCP proxy or a UDP proxy.

**15.** Method according to any of the claims 10-14, wherein the gateway (5) is running a modified transport protocol stack, using a transport protocol with delineated packets, preferably without fragmentation of reassembly between the IP network (1) on the one hand and the endpoints in the sensor network (2) on the other hand.
